Europäisches Patentamt

European Patent Office

Office européen des brevets

(19)

(11) **EP 0 846 410 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(51) Int Cl.⁷: **A01D 78/12**

(21) Anmeldenummer: **97120320.3**

(22) Anmeldetag: **20.11.1997**

(54) **Kreiselrechen für eine Heuwerbungsmaschine**

Rotary rake for haymaking machine

Râteau faneur pour machine de fenaison

(84) Benannte Vertragsstaaten:
**AT DE DK FR NL**

(30) Priorität: **06.12.1996 DE 19650650**

(43) Veröffentlichungstag der Anmeldung:
**10.06.1998 Patentblatt 1998/24**

(73) Patentinhaber: **Maschinenfabrik Bernard Krone GmbH**
**48480 Spelle (DE)**

(72) Erfinder:
• **Krone, Bernard**
**48480 Spelle (DE)**
• **Horstmann, Josef, Dipl.-Ing.**
**49479 Ibbenbüren (DE)**

(56) Entgegenhaltungen:
EP-A- 0 403 409        EP-A- 0 590 311
EP-A- 0 723 741        DE-A- 3 000 820
DE-A- 4 036 685        FR-A- 2 110 930

**Beschreibung**

Die Erfindung bezieht sich auf einen Kreiselrechen für eine Heuwerbungsmaschine, insbesondere für einen Kreiselschwader nach dem Oberbegriff des Anspruches 1. Aus der Praxis sind eine Vielzahl von Kreiselrechen bekannt, bei denen mit Zinken bestückte Zinkenarme drehbar in oder an einem Kreiselgehäuse des Kreiselrechens gelagert sind und während der Drehbewegung der Kreiselrechen um eine etwa vertikal ausgerichtete Achse von einer Steuerkurve gesteuert werden.

In einer EP 0 590 311 A1 wird ein Kreiselrechen offenbart, dessen Kreiselgehäuse aus zwei Hälften mit sich berührenden Planflächen besteht, die miteinander verschraubt sind. Im Bereich ihrer Außendurchmesser weisen die Hälften des Kreiselgehäuses Ausstülpungen auf, in denen die Zinkenarme über äußere Traglager aufgenommen sind. Zusätzlich sind die Zinkentragarme in inneren Traglagern gelagert, die mit beiden Gehäusehälften verschraubt sind. Bei der Recharbeit der Zinken des Kreiselrechens auf dem Erdboden sind die aus zylindrischen Rohren hergestellten Zinkenarme erheblichen Biegebeanspruchungen ausgesetzt, denen zudem noch Torsionsbeanspruchungen überlagert sind. Aufgrund der geringen elastischen Verformbarkeit der Zinkenarme können deshalb Beschädigungen an den Zinkenarmen, insbesondere Brüche der Zinkenarme im Bereich der äußeren Traglager auftreten.

Aufgabe der Erfindung ist es, einen Kreiselrechen für eine Heuwerbungsmaschine, insbesondere für einen Kreiselschwader zu schaffen, bei dem durch eine Optimierung der elastischen Verformbarkeit der Zinkenarme bzw. durch eine optimal an die Beanspruchung der Zinkenarme angepaßte Gestaltung die Dauerhaltbarkeit der Zinkenarme verbessert wird.

Zur Lösung dieser Aufgabe zeichnet sich der Kreiselrechen der obengenannten Art durch die im kennzeichnenden Teil des Anspruches 1 angegebenen Merkmale aus. Hinsichtlich der weiteren Ausgestaltung der Erfindung wird auf die Ansprüche 2 bis 10 verwiesen.

Ein erfindungsgemäßer Kreiselrechen für eine Heuwerbungsmaschine, insbesondere für einen Kreiselschwader zum Zusammenführen von auf dem Erdboden breitverteiltem Erntegut weist mit Zinken bestückte Zinkenarme auf, deren Querschnittsabmessungen in besonders vorteilhafter Weise den örtlichen Beanspruchungen angepaßt sind. Das bedeutet, daß ein zwischen den Traglagern angeordneter, erster Abschnitt der Zinkenarme sowie ein außerhalb von den Traglagern gelegener und sich an den ersten Abschnitt anschließender, zweiter Abschnitt als Bauteil ausgebildet ist, welches in Längsrichtung der Zinkenarme eine zumindest annähernd gleichbleibende Spannung aufweist, die aus einem Anteil einer Biegespannung und einem Anteil einer Torsionsspannung zusammen gesetzt ist. In diesem Zusammenhang ist es aber auch denkbar, lediglich den zwischen den Traglagern angeordneten, ersten Abschnitt der Zinkenarme oder nur den außerhalb von den Traglagern gelegenen, zweiten Abschnitt als Bauteil mit zumindest annähernd gleichbleibender Spannung auszubilden. Dadurch wird ein Kreiselrechen geschaffen, dessen Zinkenarme in einem Teilbereich bzw. auf ihrer ganzen Länge eine gleichmäßige elastische Verformbarkeit aufweisen, so daß die teilweise stoßartige Beanspruchung der Zinkenarme im Gegensatz zum Stand der Technik auf einen großen, sich in Längsrichtung der Zinkenarme erstreckenden Bereich verteilt und somit elastisch und bauteilschonend aufgenommen wird.

Erfindungsgemäß wird die Ausbildung der Zinkenarme als Bauteil mit zumindest annähernd gleichbleibender Spannung dadurch erreicht, daß der zwischen den Traglagern angeordnete, erste Abschnitt eine von den äußeren Traglagern zu den inneren Traglagern der Zinkenarme sich verringernde Querschnittsfläche aufweist, während der außerhalb von den Traglagern gelegene, zweite Abschnitt eine von den äußeren Traglagern nach außen hin abnehmende Querschnittsfläche hat. Die Zinkenarme sind also derartig ausgeführt, daß sich der größte Querschnitt im Bereich des äußeren Traglagers der Zinkenarme in oder am Kreiselgehäuse befindet. Um auch die Herstellungskosten derartiger Zinkenarme in einem günstigen Bereich zu halten, ist es weiterhin vorgesehen, die Länge des Abschnittes der Zinkenarme mit zumindest annähernd gleichbleibender Spannung auf eine Teillänge der Zinkenarme zu begrenzen. Dabei ist es vorteilhaft, den Bereich zumindest annähernd gleichbleibender Spannung an der Stelle der Zinkenarme abzugrenzen, an der der äußere, abnehmbare und die Zinken tragende Teil der Zinkenarme mit dem übrigen Teil der Zinkenarme verbunden ist.

Eine konstruktiv einfache und kostengünstige Ausbildung der Zinkenarme mit den erfindungsgemäßen Merkmalen geht davon aus, daß der zwischen den Traglagern angeordnete, erste Abschnitt und der außerhalb von den Traglagern gelegene, zweite Abschnitt aus zwei Bauteilen bestehen, welche vorzugsweise über eine Preßsitzverbindung miteinander verbunden sind. Dabei ist es vorgesehen, den zwischen den Traglagern angeordneten, ersten Abschnitt als eine kegelförmig hergestellte Welle mit einem zum inneren Traglager hin abnehmenden Durchmesser auszubilden. Zur Verbindung mit dem außerhalb von den Traglagern gelegenen und als Rohr ausgeführten, zweiten Abschnitt der Zinkenarme weist die Welle einen aus dem äußeren Traglager nach außen hinausragenden Aufnahmezapfen mit einem vom äußeren Traglager der Zinkenarme nach außen hin abnehmenden Außendurchmesser auf. Weiterhin ist der Aufnahmezapfen mit einer kegelförmigen Innenbohrung versehen, wobei der Durchmesser der Innenbohrung vom äußeren Traglager nach außen hin größer wird. Somit wird eine haltbare Verbindung des zwischen den Traglagern angeordneten, ersten Abschnittes und des außerhalb von den Traglagern gelegenen, zweiten Abschnittes der Zinkenarme erreicht, wobei der Querschnitt der Zinkenarme ausgehend vom äußeren Traglager sich nach außen hin wieder verringert. In einer Weiterbildung der Erfindung ist aber auch vorstellbar, die besagten Abschnitte der Zinkenarme als ein Bauteil auszuführen.

Eine detaillierte Beschreibung des Gegenstandes der Erfindung erfolgt nun anhand von Ausführungsbeispielen. In den Zeichnungen stellen im einzelnen dar:

Fig. 1     eine Schnittdarstellung eines Kreiselrechens für eine Heuwerbungsmaschine mit einer durch den Mittelpunkt des Kreiselrechens führenden, in Fahrtrichtung ausgerichteten, vertikalen Schnittebene;

Fig.2     eine teilweise abgebrochene, vergrößerte Schnittdarstellung eines Ausführungsbeispieles eines erfindungsgemäßen Kreiselrechens gemäß Schnittlinie II-II in Fig. 1;

Fig.3     eine teilweise abgebrochene, vergrößerte Schnittdarstellung eines weiteren Ausführungsbeispieles des erfindungsgemäßen Kreiselrechens aus einer Sicht, wie sie in Fig. 2 dargestellt ist;

Fig.4     eine Darstellung eines kompletten Zinkenarmes gemäß dem Stand der Technik mit den schematisch in einem Diagramm eingetragenen Beanspruchungsverhältnissen;

Fig.5     eine Darstellung eines kompletten Zinkenarmes gemäß der Erfindung mit den schematisch in einem Diagramm eingetragenen Beanspruchungsverhältnissen;

Fig.6     eine Ansicht des Zinkenarmes mit einer Blickrichtung gemäß Pfeil A in Fig. 5.

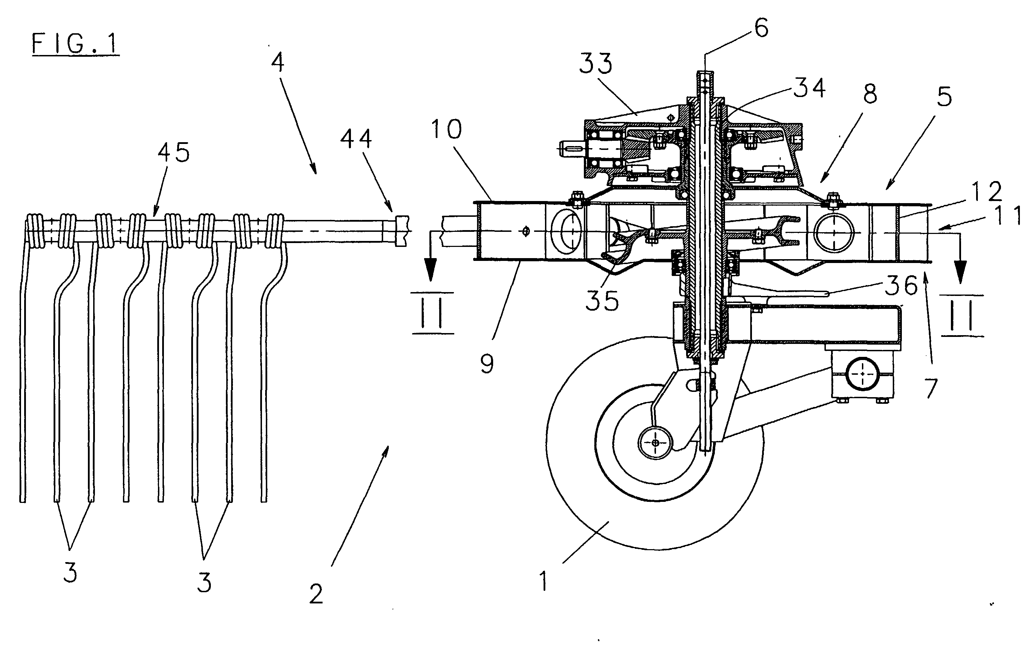

Der in Fig. 1 dargestellte, sich über höhenverstellbare Stützräder 1 gegenüber dem Erdboden abstützende Kreiselrechen 2 weist mit Zinken 3 bestückte Zinkenarme 4 auf, die in einem Kreiselgehäuse 5 drehbar gelagert sind und mit diesem gemeinsam um eine etwa senkrecht ausgerichtete Achse 6 rotieren. Derartige Kreiselrechen finden Anwendung an Kreiselschwadern, die mit einem Kreiselrechen ausgerüstet sind und über einen nicht dargestellten Tragrahmen an eine Dreipunkthubvorrichtung eines landwirtschaftlichen Zugfahrzeuges angekoppelt werden. Sie können aber auch an Kreiselschwadern mit zwei oder mehr Kreiselrechen eingesetzt werden, wobei die Kreiselrechen nebeneinander oder versetzt zueinander an einem ebenfalls nicht dargestellten Fahrgestell angeordnet sind, das von einem landwirtschaftlichen Zugfahrzeug gezogen wird.

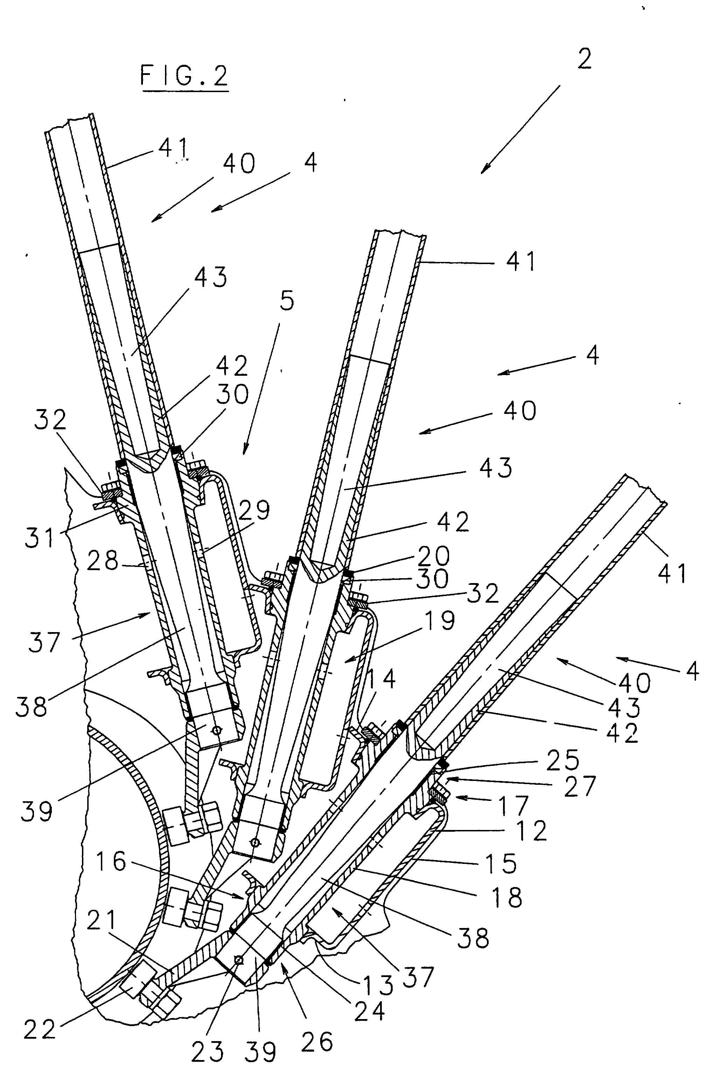

Wie aus Fig. 1 und 2 ersichtlich ist, weist der Kreiselrechen 2 ein Kreiselgehäuse 5 auf, das aus einem Gehäuseunterteil 7 und einem deckelförmigen Gehäuseoberteil 8 besteht. Das Gehäuseunterteil 7 ist ein als Schweißkonstruktion ausgebildetes Blechgehäuse, das eine Bodenplatte 9 sowie eine in einem Abstand dazu parallel angeordnete Deckronde 10 beinhaltet, welche durch einen ringähnlichen Steg 11 miteinander verbunden sind. Der ringähnliche Steg 11 setzt sich aus U-förmig ausgebildeten und jeweils aneinander gereihten Taschen 12 zusammen. Die Taschen 12 sind gekantete, U-förmige Blechprofile mit Flanschseiten 13,14 und einer Längsseite 15, wobei die Zuschnittbreite des Blechprofils den Abstand der Bodenplatte 9 zur Deckronde 10 bestimmt. Die Flanschseiten 13,14 weisen Aufnahmestellen 16,17 für eine Lagerhülse 18 auf.

Weitere Bestandteile des erfindungsgemäßen Kreiselrechens 2 sind zu Kompaktbaugruppen 19 montierte Zinkenarme 4, auf denen von der für die Lagerung im Kreiselgehäuse 5 vorgesehenen Seite her die Lagerhülsen 18 aufgeschoben sind, welche einerseits durch einen Anschlag 20 und andererseits durch einen Steuerarm 21 mit einer daran außermittig angebrachten Steuerrolle 22 auf dem Zinkenarm 4 arretiert sind. Der Steuerarm 21 wird durch einen in eine Aufnahmebohrung einsetzbaren Sicherungsstift 23 oder dgl. Sicherungselemente auf dem Zinkenarm 4 befestigt. Jeweils im Endbereich der Lagerhülse 18 angeordnete Gleitlagerbuchsen 24,25 oder dgl. Lagerungselemente bilden die Traglager 26,27 der Zinkenarme 4. Durch Bohrungen 28,29 im mittleren Bereich der Lagerhülse 18 ist eine Schmierung der Gleitlagerbuchsen 24,25 mit Schmiermittel aus dem Kreiselgehäuse 5 vorgesehen. Damit eine dauerhafte Abdichtung der Zinkenarme 4 gegenüber den Lagerhülsen 18 gewährleistet werden kann, ist den Lagerhülsen 18 an der den Zinken 3 zugewandten Seite ein Radialdichtring 30 zugeordnet.

Aus der vergrößerten Schnittdarstellung in Fig. 2 geht weiterhin hervor, wie die Kompaktbaugruppe 19 im Kreiselgehäuse 5 aufgenommen und arretiert ist. Der vordere, der Mitte des Kreiselgehäuses 5 zugewandte Teil der Lagerhülse 18 greift dabei in die Aufnahmestelle 16, während der hintere, den Zinken 3 zugewandte Teil der Lagerhülse 18 mit dem kegelstumpfähnlichen Ansatz 31 in der Aufnahmestelle 17 eingesetzt ist. Dadurch entsteht in der Aufnahmestelle 17 eine Kegelverbindung. Über die auf der Flanschseite 14 aufgeschraubte Deckplatte 32 ist die Lagerhülse 18 und damit die Kompaktbaugruppe 19 in den Aufnahmestellen 16,17 der Taschen 12 axial gesichert.

Zum weiteren Aufbau des Kreiselrechens 2 (Fig.1) gehört ein Winkelgetriebe 33, das verdrehfest mit einem nicht dargestellten Rahmenteil verbunden ist und das als Halterung für den Kreiselrechen 2 dient. Im oberen Teil des Winkelgetriebes 33 ist eine Hohlwelle 34 gehaltert, auf der unterhalb des Winkelgetriebes 33 das Kreiselgehäuse 5 drehbar gelagert ist. Weiterhin ist auf der Hohlwelle 34 eine Steuerkurve 35 drehbeweglich angebracht, welche über einen Stellhebel 36 in verschiedenen Verstellpositionen einstellbar ist. Die Wirkung der Steuerkurve 35 besteht darin, die Zinkenarme 4 mit den daran angebrachten Zinken 3 durch Drehung um die Mittelachse der Zinkenarme 4 während einer Umdrehung des Kreiselgehäuses 5 um die etwa senkrechte Achse 6 aus einer Rechstellung in eine hochgeschwenkte Stellung für die Schwadablage und danach wieder in die Rechstellung zu bewegen. Das geschieht dadurch, daß die endseitig an den Zinkenarmen 4 über Steuerarme 21 angebrachten Steuerrollen 22 während der Drehbewegung des Kreiselrechens 2 um die Achse 6 in der Steuerkurve 35 geführt sind.

Wie weiterhin insbesondere aus Fig. 2 zu ersehen ist, besteht ein zwischen den Traglagern 26,27 angeordneter, erster Abschnitt 37 der Zinkenarme 4 aus einer kegelförmig ausgeführten Welle 38, welche an der der Mitte des Kreiselgehäuses 5 zugewandten Seite einen Lager- und Aufnahmezapfen 39 aufweist. In diesem Ausführungsbeispiel hat der Lager- und Aufnahmezapfen 39 einen gegenüber dem inneren Durchmesser des kegelförmigen Teiles der Welle 38 größer dimensionierten Durchmesser. Dadurch wird eine stabile und mit einem minimalen Verschleiß behaftete Lagerung der Zinkenarme 4 bzw. robuste Aufnahme der Steuerarme 21 auf den Zinkenarmen 4 erreicht. Der maximale Querschnitt der Welle 38 wird im Bereich des äußeren Traglagers 27 erreicht. Der außerhalb von den Traglagern 26,27 gelegene, zweite Abschnitt 40 der Zinkenarme 4 ist erfindungsgemäß so ausgebildet, daß sich der Querschnitt, ausgehend vom äußeren Traglager 27 in radialer Richtung nach außen wieder verringert. Dies wird beispielsweise dadurch erreicht, daß der außerhalb von den Traglagern 26,27 gelegene zweite Abschnitt 40 der Zinkenarme 4 als Rohr 41 ausgeführt ist, welches über eine Preßsitzverbindung mit einem Aufnahmezapfen 42 der Welle 38 verbunden ist. Der Aufnahmezapfen 42 ist dazu mit einem sich vom äußeren Traglager 27 nach außen hin verringernden Außendurchmesser ausgebildet. Zusätzlich weist der Aufnahmezapfen 42 eine kegelförmig ausgeführte Innenbohrung 43 auf, dessen Durchmesser, ausgehend vom äußeren Traglager 27 nach außen hin zunimmt.

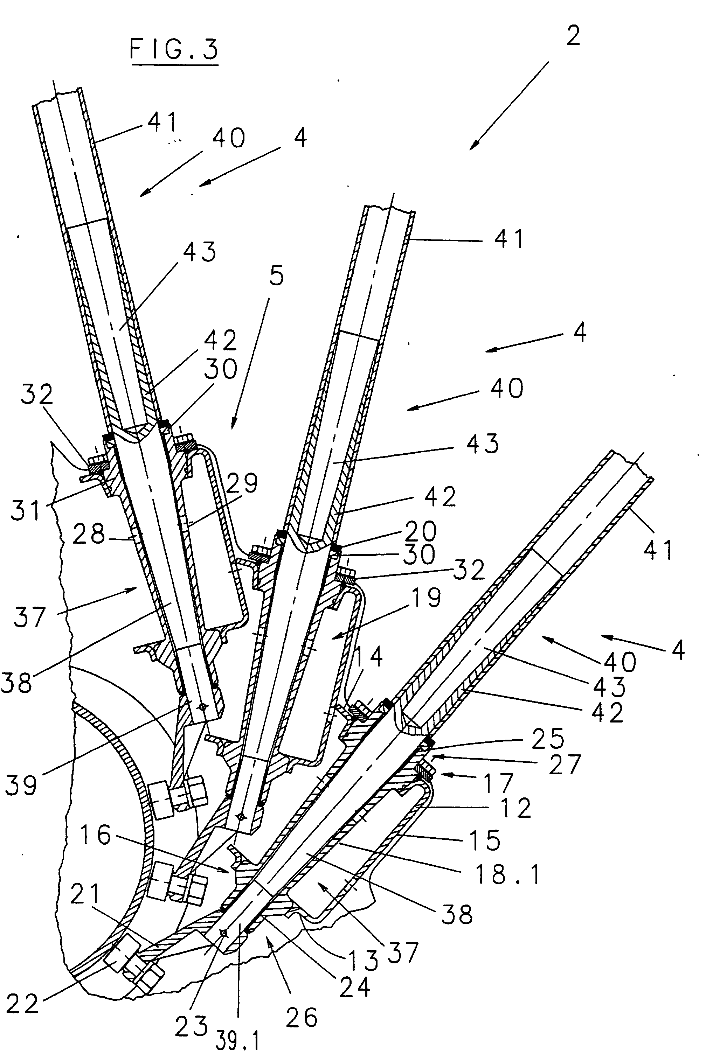

In einem weiteren Ausführungsbeispiel, dargestellt in Fig. 3, ist eine Lösungsvariante aufgezeigt, die beispielsweise für Kreiselschwader mit kleineren Arbeitsbreiten in Betracht kommt. Dabei ist es vorgesehen, den Lager- und Aufnahmezapfen 39.1 der Welle 38 mit einem Durchmesser auszubilden, der dem inneren Durchmesser des kegelförmigen Teiles der Welle 38 entspricht. Als Folge davon kann auch die Lagerhülse 18.1 kegelähnlich ausgeführt sein, so daß sich daraus Gewichtseinsparungen bzw. eine vorteilhafte Reduzierung des Platzbedarfes einer Zinkenarmlagerung ergeben.

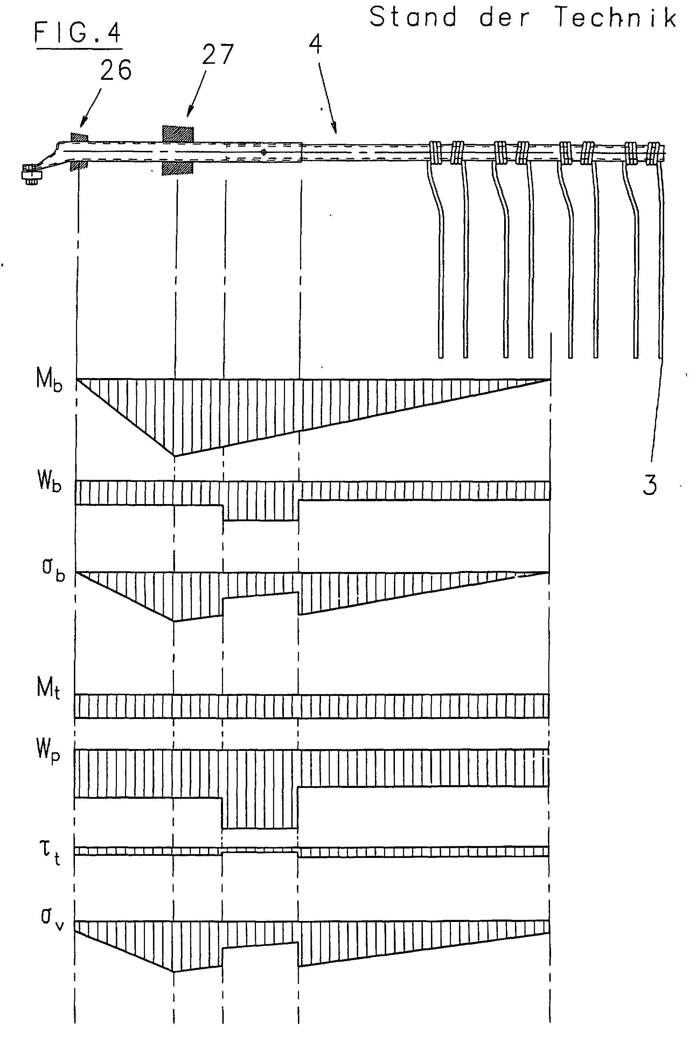

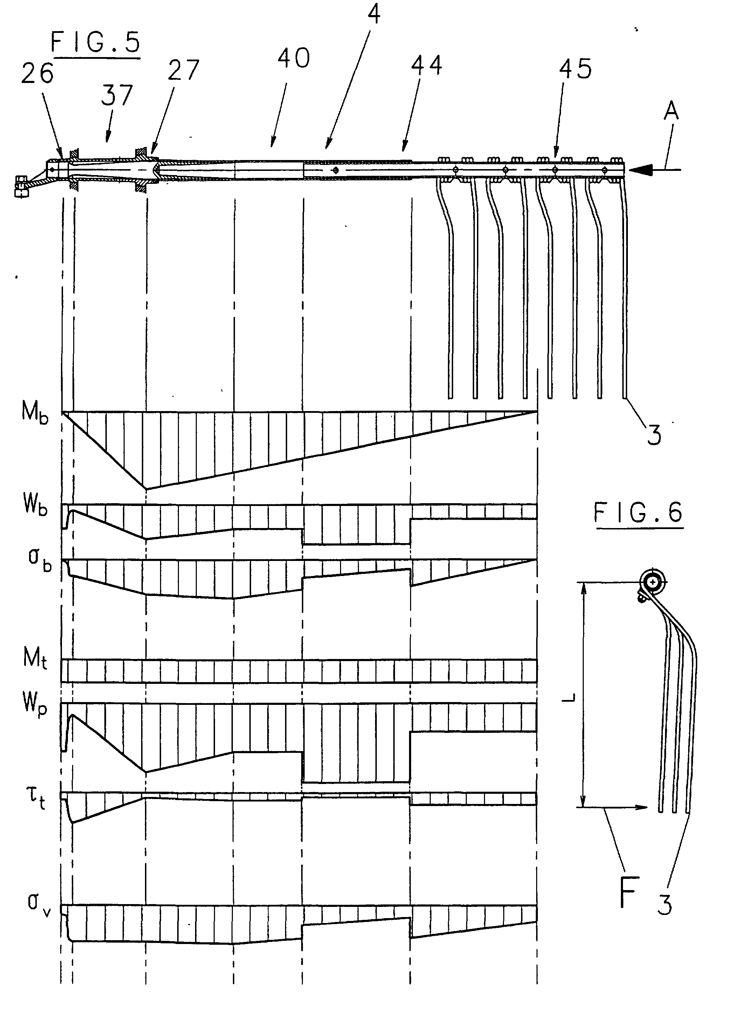

Zur Verdeutlichung des Grundgedankens der Erfindung ist in den Fig. 4 und 5 jeweils ein mit Zinken 3 bestückter Zinkenarm 4 mit den dazu gehörenden Beanspruchungsverhältnissen dargestellt. Bei der Bestimmung der Belastung eines Zinkenarmes 4 wird von einer vereinfachten Annahme (Fig. 6) ausgegangen, nach der eine Kraft F etwa in der Mitte der von den Zinken 3 gebildeten Rechbreite und in einem Abstand L von der Mittelachse des Zinkenarmes 4 den weiteren Berechnungen und Ermittlungen zugrunde gelegt worden ist. In Fig. 4 ist dazu ein Zinkenarm 4 nach dem Stand der Technik veranschaulicht. Aufgrund der vorstehenden Lastannahme ergibt sich ein von dem Zinkenarm 4 aufzunehmender Biegemomentenverlauf $M_b$, der im Bereich des äußeren Traglagers 27 seinen maximalen Wert aufweist und ein konstantes Torsionsmoment $M_t$. Anhand der Querschnitte des Zinkenarmes läßt sich ein äquatoriales Widerstandsmoment $W_b$ und ein polares Widerstandsmoment $W_p$ ermitteln, so daß daraus nach der Berechnungsformel:

$$\sigma_b = M_b / W_b$$

und

$$\tau_t = M_t / W_p$$

die aus der Biegungs- und Torsionsbeanspruchung vorhandenen Spannungen $\sigma_b$ und $\tau_t$ errechnet werden können. Aus der Biegespannung $\sigma_b$ und der Torsionsspannung $\tau_t$ ist mit Hilfe einer Berechnungsformel nach Bach (siehe Dubbel, Taschenbuch für den Maschinenbau, 13. Auflage auf Seite 424) eine Vergleichsspannung $\sigma_v$ zu ermitteln. Durch diese Umrechnung wird eine Zurückführung aus einem mehrachsigen (Biegung und Torsion) in einen einachsigen Spannungszustand erreicht. Bei einer Betrachtung des Spannungsverlaufes der Vergleichsspannung $\sigma_v$ in Fig. 4 (Stand der Technik) ist nicht zu übersehen, daß im Bereich des äußeren Traglagers 27 der Zinkenarme 4 ein Maximum der Spannung (Vergleichsspannung) vorliegt, so daß in diesem Bereich besonders häufig Brüche auftreten. Beim Zinkenarm 4 gemäß der Erfindung (Fig. 5) zeigt sich dagegen anhand der nach dem gleichen Rechenschema ermittelten Beanspruchungsverhältnisse ein völlig anderes Bild. Aus dem Diagramm der Vergleichsspannung $\sigma_v$ des Zinkenarmes 4 geht hervor, daß der Wert der Vergleichsspannung $\sigma_v$ über einen großen Bereich annähernd konstant ist. Dieser Bereich erstreckt sich dabei vom inneren Traglager 26 des Zinkenarmes 4 bis hin zu einer Verbindungsstelle 44, an der ein abnehmbarer, mit den Zinken 3 bestückter Teil 45 mit dem übrigen Teil des Zinkenarmes 4 verbunden ist. Aus dem hochbeanspruchten und deshalb bruchgefährdeten Bereich des Zinkenarmes 4 (Fig. 4) wird ein Bereich mit gleichmäßiger elastischer Verformbarkeit (Fig. 5), in dem auch teilweise stoßartige Beanspruchungen der Zinkenarme 4 elastisch und bauteilschonend aufgenommen werden.

**Patentansprüche**

1. Kreiselrechen für eine Heuwerbungsmaschine, insbesondere für einen Kreiselschwader, mit um eine etwa senkrecht ausgerichtete Achse (6) umlaufenden, an ihren äußeren Enden mit Zinken (3) bestückten Zinkenarmen (4), die in oder an einem Kreiselgehäuse (5) in Traglagern (26,27) drehbar gelagert sind und die mittels einer Steuerkurve (35) gesteuert werden, **dadurch gekennzeichnet, daß** ein zwischen den Traglagern (26,27) der Zinkenarme (4) angeordneter, erster Abschnitt (37) eine zum inneren Traglager (26) der Zinkenarme (4) hin abnehmende Querschnittsfläche und/oder ein sich an den ersten Abschnitt (37) anschließender, außerhalb von den Traglagern (26,27) gelegener, zweiter Abschnitt (40) eine vom äußeren Traglager (27) der Zinkenarme (4) nach außen hin sich verringernde Querschnittsfläche aufweist und so ein Bauteil mit einer annähernd Konstanten Vergleichsspannung ($\sigma_v$) entsteht.

2. Kreiselrechen für eine Heuwerbungsmaschine nach Anspruch 1, **dadurch gekennzeichnet, daß** die Zinkenarme (4) im Bereich des äußeren Traglagers (27) ihre maximale Querschnittsfläche aufweisen.

3. Kreiselrechen für eine Heuwerbungsmaschine nach Anspruch 1 und 2, **dadurch gekennzeichnet, daß** der außerhalb von den Traglagern (26,27) gelegene, zweite Abschnitt (40) eine Länge umfaßt, die einer Teillänge des aus dem Kreiselgehäuse hinausragenden Teiles des Zinkenarmes (4) entspricht.

4. Kreiselrechen für eine Heuwerbungsmaschine nach einem der Ansprüche 1 bis 3, **dadurch gekennzeichnet, daß** der zwischen den Traglagern (26,27) angeordnete, erste Abschnitt (37) und der außerhalb von den Traglagern (26,27) gelegene, zweite Abschnitt (40) der Zinkenarme (4) ein Bauteil bilden.

5. Kreiselrechen für eine Heuwerbungsmaschine nach einem der Ansprüche 1 bis 4, **dadurch gekennzeichnet, daß** der zwischen den Traglagern (26,27) angeordnete, erste Abschnitt (37) und der außerhalb von den Traglagern (26,27) gelegene, zweite Abschnitt (40) der Zinkenarme (4) zumindest zwei Bauteile umfassen.

6. Kreiselrechen für eine Heuwerbungsmaschine nach einem der Ansprüche 1 bis 5, **dadurch gekennzeichnet, daß** der zwischen den Traglagern (26,27) angeordnete, erste Abschnitt (37) des Zinkenarmes (4) als eine kegelförmig ausgebildete Welle (38) mit einem zum inneren Traglager (26) hin abnehmenden Durchmesser ausgeführt ist.

7. Kreiselrechen für eine Heuwerbungsmaschine nach einem der Ansprüche 1 bis 6, **dadurch gekennzeichnet, daß** der außerhalb von den Traglagern (26,27) gelegene, zweite Abschnitt (40) des Zinkenarmes (4) von einem Rohr (41) gebildet wird, welches auf einem Aufnahmezapfen (42) der Welle (38) angebracht ist.

8. Kreiselrechen für eine Heuwerbungsmaschine nach einem der Ansprüche 1 bis 7, **dadurch gekennzeichnet, daß** der Aufnahmezapfen (42) der Welle (38) mit einer kegelförmig ausgeführten Innenbohrung (43) mit einem von dem äußeren Traglager (27) des Zinkenarmes (4) nach außen zunehmenden Durchmesser versehen ist.

9. Kreiselrechen für eine Heuwerbungsmaschine nach einem der Ansprüche 1 bis 8, **dadurch gekennzeichnet, daß** der Aufnahmezapfen (42) der Welle (38) einen vom äußeren Traglager (27) nach außen abnehmenden Außendurchmesser aufweist.

10. Kreiselrechen für eine Heuwerbungsmaschine nach einem der Ansprüche 1 bis 9, **dadurch gekennzeichnet, daß** die Welle (38) und das Rohr (41) vorzugsweise über eine Preßsitzverbindung miteinander verbunden sind.

**Claims**

1. Rotary rake for a haymaking machine, particularly for a rotary swather, with tine arms (4) rotating about a more or less vertically aligned axis (6) and fitted at its outer ends with tines (3), which arms are rotatably mounted in or on a rotary housing (5) in journal bearings (26, 27) and are guided by means of a cam (35), **characterised in that** a first section (37) arranged between the journal bearings (26, 27) of the tine arms (4) exhibits a cross-sectional face that tapers towards the inner journal bearing (26) of the tine arms (4) and/or **in that** a second section (40), connected to the first section (37) and located outside the journal bearings (26, 27), exhibits a cross-sectional face that reduces in size from the outer journal bearing (27) of the tine arms (4) outwards, thereby forming a component with an almost constant comparative stress ($\sigma_v$).

2. Rotary rake for a haymaking machine according to claim 1, **characterised in that** the tine arms (4) exhibit their maximum cross-sectional area in the area of the outer journal bearing (27).

3. Rotary rake for a haymaking machine according to claim 1 and 2, **characterised in that** the second section (40) located outside the journal bearings (26, 27) has a length which corresponds to a partial length of the part of the tine arm (4) projecting from the rotary housing.

4. Rotary rake for a haymaking machine according to one of claims 1 to 3, **characterised in that** the first section (37) arranged between the journal bearings (26, 27) and the second section (40) of the tine arms (4), located outside the journal bearings (26, 27), form one component.

5. Rotary rake for a haymaking machine according to one of claims 1 to 4, **characterised in that** the first section (37) arranged between the journal bearings (26, 27) and the second section (40) located outside the journal bearings (26, 27) comprise at least two components.

6. Rotary rake for a haymaking machine according to one of claims 1 to 5, **characterised in that** the first section (37) of the tine arm (4) arranged between the journal bearings (26, 27) is designed as a conically shaped shaft (38) with a diameter tapering towards the inner journal bearing (26).

7. Rotary rake for a haymaking machine according to one of claims 1 to 6, **characterised in that** the second section (40) of the tine arms (4), located outside the journal bearings (26, 27), is formed by a tube (41) which is fitted on a receiving pin (42) of the shaft (38).

8. Rotary rake for a haymaking machine according to one of claims 1 to 7, **characterised in that** the receiving pin (42) of the shaft (38) is provided with a conically shaped inner bore (43) with a diameter that increases from the outer journal bearing (27) of the tine arm (4) outwards.

9. Rotary rake for a haymaking machine according to one of claims 1 to 8, **characterised in that** the receiving pin (42) of the shaft (38) exhibits an outside diameter which reduces from the outer journal bearing (27) outwards.

10. Rotary rake for a haymaking machine according to one of claims 1 to 9, **characterised in that** the shaft (38) and the tube (41) are preferably connected to each other by means of an interference fit connection.

**Revendications**

1. Râteau faneur de machine de fenaison, notamment d'andaineuse rotative, comportant des bras porte-dents (4) dont les extrémités extérieures sont munies de dents (3), ces bras tournant en étant alignés autour d'un axe (6) sensiblement vertical, les bras étant montés à rotation dans ou sur un carter de rotor (5) dans des paliers de support (26, 27) et ils sont commandés par une courbe de commande (35),
**caractérisé par**
un premier segment (37) prévu entre les paliers de support (26, 27) des bras porte-dents (4), ayant une surface de section décroissante vers le palier de support intérieur (26) du bras porte-dents (4) et/ou un second segment (40) adjacent au premier segment (37) est situé en dehors des paliers de support (26, 27), avec une surface de section allant en diminuant du palier de support (27) extérieur du bras porte-dents (4) vers l'extérieur, formant ainsi une pièce ayant une contrainte équivalente ($\sigma_v$) pratiquement constante.

2. Râteau faneur de machine de fenaison selon la revendication 1,
**caractérisé en ce que**
les bras porte-dents (4) ont leur section maximale au niveau du palier de support extérieur (27).

3. Râteau faneur de machine de fenaison selon l'une quelconque des revendications 1 et 2,
**caractérisé en ce que**
le second segment (40) situé à l'extérieur des paliers de support (26, 27) a une longueur qui correspond à une longueur partielle de la partie du bras de dents (4) dépassant du carter du rotor.

4. Râteau faneur de machine de fenaison selon l'une quelconque des revendications 1 à 3,
**caractérisé en ce que**
le premier segment (37) prévu entre les paliers de support (26, 27) et le second segment (40) situé à l'extérieur des paliers de support (26, 27) du bras porte-dents (4) constitue une seule pièce.

5. Râteau faneur de machine de fenaison selon l'une quelconque des revendications 1 à 4,
**caractérisé en ce que**
le premier segment (37) prévu entre les paliers de support (26, 27) et le second segment (40) situé à l'extérieur des paliers de support (26, 27) du bras porte-dents (4) comprennent au moins deux pièces.

6. Râteau faneur de machine de fenaison selon l'une quelconque des revendications 1 à 5,
**caractérisé en ce que**
le premier segment (37) du bras porte-dents (4) situé entre les paliers (26, 27) est un arbre conique (38) de diamètre diminuant vers le palier de support intérieur (26).

**7.** Râteau faneur de machine de fenaison selon l'une quelconque des revendications 1 à 6,
**caractérisé en ce que**
le second segment (40) du bras porte-dents (4) situé à l'extérieur des paliers de support (26, 27) est formé par un tube (41) monté sur une broche (42) de l'arbre (38).

**8.** Râteau faneur de machine de fenaison selon l'une quelconque des revendications 1 à 7,
**caractérisé en ce que**
la broche (42) de l'arbre (38) est munie d'un perçage intérieur (43) de forme conique avec un diamètre croissant vers l'extérieur à partir du palier de support extérieur (27) du bras porte-dents (4).

**9.** Râteau faneur de machine de fenaison selon l'une quelconque des revendications 1 à 8,
**caractérisé en ce que**
la broche de réception (42) de l'arbre (38) a un diamètre extérieur diminuant vers l'extérieur à partir du support de palier extérieur (27).

**10.** Râteau faneur de machine de fenaison selon l'une quelconque des revendications 1 à 9,
**caractérisé en ce que**
l'arbre (38) et le tube (41) sont de préférence reliés par un siège pressé.

FIG.1

EP 0 846 410 B1

FIG.2

FIG.3

FIG.4

Stand der Technik

FIG.5

FIG.6

$M_b$

$W_b$

$\sigma_b$

$M_t$

$W_p$

$\tau_t$

$\sigma_v$